# FASCICULE DE BREVET EUROPEEN

(11) **EP 2 950 049 B1**
(45) Date de publication et mention de la délivrance du brevet: **07.12.2016**
(21) Numéro de dépôt: 15168827.2
(22) Date de dépôt: 22.05.2015
(51) Int. Cl.: G01C 23/00

(54) **PROCÉDÉ CONTRIBUTEUR DE LA SÉCURISATION D'UNE REPRÉSENTATION GRAPHIQUE SYNTHÉTIQUE DE LA VUE EXTÉRIEURE D'UN AÉRONEF**
VERFAHREN, DAS ZUR SICHERUNG DER SYNTHETISCHEN GRAFISCHEN DARSTELLUNG DER AUSSENANSICHT EINE LUFTFAHRZEUGS BEITRÄGT
A METHOD CONTRIBUTING TO THE INTEGRITY MONITORING OF A SYNTHETIC GRAPHIC REPRESENTATION OF THE OUTSIDE VIEW OF AN AIRCRAFT

(30) Priorité: 28.05.2014 FR 1401230
(43) Date de publication de la demande: 02.12.2015
(73) Titulaire: Airbus Helicopters, 13725 Marignane Cedex (FR)
(72) Inventeur: OTT, Adrien, 13300 SALON DE PROVENCE (FR)
(74) Mandataire: Pouillot, Laurent Pierre Paul

(56) Documents cités:
- EP-A1- 2 169 355
- US-A- 4 698 785
- US-A- 5 335 177
- US-A1- 2008 211 814
- US-A1- 2012 203 997
- US-B2- 7 342 512

## Description

La présente invention est située dans le domaine de l'avionique des aéronefs et en particulier des dispositifs visuels d'aide au pilotage et à la navigation.

La présente invention concerne un procédé contributeur de la sécurisation d'une représentation graphique synthétique de la vue extérieure d'un aéronef ainsi qu'un dispositif de vision synthétique muni d'un tel procédé contributeur de la sécurisation.

L'avionique des aéronefs fournit de nombreuses informations au pilote et/ou au copilote tant sur les paramètres de l'aéronef et les conditions de vol que sur la navigation. Les récentes évolutions dans le domaine de l'avionique permettent notamment d'afficher sur un moyen de visualisation, tel un écran fixé dans le cockpit de l'aéronef ou bien un système de vision tête haute intégré par exemple au casque du pilote de l'aéronef, une représentation graphique synthétique de la vue extérieure de cet aéronef.

Une telle représentation graphique synthétique de la vue extérieure de cet aéronef peut être en perspective et est généralement construite à partir de fonctions mathématiques ainsi que de moyens logiciels tels qu'un logiciel de tracé en perspective. Cette représentation graphique se base d'une part sur au moins une base de données de l'environnement de l'aéronef et d'autre part sur la position connue de l'aéronef dans cet environnement.

Chaque base de données de l'environnement de l'aéronef peut comprendre notamment des informations sur le terrain et le relief environnant l'aéronef ainsi que les positions dans cet environnement de différents éléments particuliers tels que des obstacles et des zones d'atterrissage par exemple. La position de l'aéronef peut être obtenue, entre autres, par un dispositif de localisation par satellites dont l'aéronef est équipé.

De plus, cette représentation graphique synthétique peut prendre en compte la route de l'aéronef, c'est-à-dire la direction dans laquelle vole l'aéronef, ainsi que son cap, qui définit l'orientation de l'aéronef par exemple rapport au nord magnétique, et son attitude, qui correspond à son inclinaison autour des axes de roulis, de tangage et de lacet de l'aéronef. Cette représentation graphique synthétique est alors orientée sur le moyen de visualisation afin d'être cohérente avec la vue réelle du pilote de l'aéronef, conformément aux informations de cap et d'attitude de l'aéronef.

Les axes de roulis, de tangage et de lacet sont des axes caractéristiques d'un aéronef. L'axe de roulis est selon une direction longitudinale s'étendant de l'arrière de l'aéronef vers l'avant de l'aéronef, l'axe de lacet est selon une direction d'élévation s'étendant de bas en haut perpendiculairement à la direction longitudinale et l'axe de tangage est selon une direction transversale s'étendant de droite à gauche perpendiculairement aux directions longitudinale et d'élévation.

Ces informations de cap et d'attitude sont par exemple fournies par un moyen de détermination du cap et de l'attitude connu sous l'acronyme AHRS correspondant à la désignation en langue anglaise « Attitude and Heading Reference System ».

La représentation graphique synthétique de la vue extérieure d'un aéronef est généralement désignée par l'acronyme SVS désignant en langue anglaise « Synthetic Vision System ».

Par ailleurs, il peut être superposé à cette représentation graphique synthétique des informations complémentaires de pilotage désignées souvent par l'expression « symbologie de pilotage ». Cette symbologie de pilotage comprend notamment une symbologie d'attitude représentant des références d'assiette et d'inclinaison telles qu'un symbole de ligne d'horizon, une échelle d'assiette de part et d'autre de la ligne d'horizon et une échelle d'inclinaison représentant ainsi le tangage et le roulis de l'aéronef. Ces informations d'assiette sont généralement fournies par un moyen de détermination du cap et de l'attitude de type AHRS et transcrites graphiquement sur le moyen de visualisation à l'aide d'une fonction d'affichage dédiée. La symbologie de pilotage peut également comprendre des repères particuliers correspondant par exemple à la position de terrains ou de zones d'atterrissage situés dans l'environnement de l'aéronef.

On connait par exemple le document US7352292 qui décrit un système de représentation graphique synthétique à partir d'une base de données et des informations de capteurs présents sur l'aéronef. Cette représentation graphique est une combinaison des données issues des capteurs et des informations de la base de données. La base de données est également mise à jour lors des vols de l'aéronef avec les données issues des capteurs.

En outre, l'affichage de la représentation graphique synthétique et/ou de la symbologie de pilotage peut être surveillé afin de garantir la validité des informations affichées. Cette surveillance peut être réalisée de différentes façons.

Par exemple, la sécurisation d'un affichage peut être assurée par un mécanisme de rétroaction, c'est-à-dire que l'on calcule à partir des informations affichées les données initiales ayant générées cet affichage et on compare les résultats de ce calcul avec les données initiales. Un tel mécanisme de rétroaction peut également être désigné par sa terminologie en langue anglaise « feedback ».

Le document FR2670591 décrit un tel système de sécurisation d'information de pilotage d'un aéronef. Ce système de sécurisation effectue un calcul rétroactif des paramètres de navigation à partir des informations affichées et compare les informations ainsi obtenues avec les données issues directement des capteurs de l'aéronef. Une alarme est alors émise si une différence supérieure à un seuil prédéfini est atteinte. Le calcul des informations affichées initialement et le calcul rétroactif des paramètres de navigation sont effectués par la même fonction.

On peut également mettre en oeuvre deux voies de génération graphique dissemblables et parallèles afin de sécuriser un tel affichage. On peut alors comparer ces deux représentations graphiques générées parallèlement éventuellement par deux moyens de calcul distincts.

On connaît le document US7342512 qui décrit un système d'affichage pour un aéronef comportant un calculateur de comparaison afin de contrôler cet affichage. Ce calculateur de comparaison effectue un calcul indépendamment du dispositif d'affichage d'une sélection de points réellement affichés à partir des informations correspondantes fournies par les capteurs utilisés par le dispositif d'affichage et compare les résultats avec les points réellement affichés. Si un écart significatif existe, un message d'erreur est alors affiché.

En outre, le document US7212175 décrit un système comparant les informations affichées sur un écran de visualisation et des données de l'aéronef. Si ces informations affichées et les données de l'aéronef sont différentes, aucune information n'est affichée sur cet écran de visualisation.

De plus, le document EP1875439 décrit un dispositif de génération graphique comportant des moyens de surveillance de l'affichage de cette génération graphique. Ces moyens de surveillance permettent d'interdire l'utilisation de certaines fonctions susceptibles de générer l'affichage de symboles récurrents. Ces moyens de surveillance permettent également de générer et de contrôler des images dédiées à la surveillance ainsi que de surveiller certaines variables d'états internes au dispositif de génération graphique.

Le document US8243098 décrit un dispositif d'affichage d'une image autoritaire composée en fait de plusieurs sous-images combinées entre elles. L'image autoritaire peut être comparée avec une image originale afin de valider cette image originale.

Par ailleurs, le document FR2963690 décrit un mécanisme de sécurisation d'un système informatique client/serveur permettant d'une part d'empêcher le déclenchement fortuit d'une fonction et d'autre part de garantir l'intégrité des fonctions et la cohérence des informations échangées entre le client et le serveur. Ce mécanisme de sécurisation utilise des signatures informatiques et la mise en place de circuits « feedback ».

On connait également le document US4698785 qui décrit une méthode de détection d'erreur sur un affichage. On affiche tout d'abord des informations en fonction de données initiales fournies par un capteur et transformées par une première fonction, puis on calcule à partir de ces informations affichées et par une seconde fonction, qui est par exemple l'inverse de la première fonction, des données « origines ». Ces données « origines » sont enfin comparées avec les données initiales fournies par un capteur pour détectées d'éventuelles erreurs d'affichage.

Enfin, les documents EP2169355 et US2012/203997 constituent l'arrière plan technologique de l'invention.

Par ailleurs, dans le domaine des aéronefs, des normes fixent les conditions de sécurité applicables aux différents systèmes et dispositifs utilisés, par exemple aux systèmes de l'avionique, précisant notamment les effets d'un défaut sur un tel système. Cinq niveaux de criticité d'un système, désignés par l'acronyme DAL correspondant à la désignation en langue anglaise « Design Assurance Level » sont ainsi définis par la norme aéronautique « ARP4754A » et utilisés par exemple dans la norme « DO-254 ».

Le niveau DAL A est le niveau le plus critique, un défaut pouvant provoquer un problème catastrophique pouvant aboutir à un crash de l'aéronef. A contrario, le niveau DAL E est le niveau le moins critique, un défaut pouvant alors provoquer un problème sans effet sur la sécurité du vol de l'aéronef.

De fait, les systèmes de l'avionique de niveau de criticité DAL A sont intègres et conçus pour limiter les risques d'apparition de défauts. De tels systèmes comportent généralement des dispositifs de contrôle et de sécurisation afin de détecter l'apparition de défauts. Les systèmes de l'avionique de niveau de criticité DAL A sont alors les plus sûrs et les plus fiables de l'aéronef.

L'affichage de la symbologie de pilotage a généralement un niveau de criticité DAL A, la connaissance de l'assiette de l'aéronef étant importante, voire essentielle, pour la maîtrise du vol de l'aéronef et, par suite, la réalisation d'un vol en sécurité. L'affichage de la symbologie de pilotage répond ainsi aux exigences d'intégrité et de sûreté de fonctionnement nécessaires à son utilisation comme une aide au pilotage et à la navigation de l'aéronef.

Par contre, la représentation graphique synthétique de la vue extérieure d'un aéronef n'a pas aujourd'hui un niveau de criticité DAL A. En particulier, l'orientation de la représentation en perspective sur le moyen de visualisation de l'aéronef, qui prend en compte le cap et l'attitude de l'aéronef, n'est pas surveillée. Par suite, son bon positionnement vis-à-vis du cap et de l'assiette de l'aéronef n'est pas garanti. De fait, cette représentation graphique synthétique ne répond pas aux exigences de fiabilité, d'intégrité et de sûreté de fonctionnement nécessaires à son utilisation comme une aide au pilotage et à la navigation.

De la sorte, la représentation graphique synthétique de la vue extérieure d'un aéronef doit être prise en compte comme une simple information fournie au pilote de l'aéronef, sans être utilisée en tant qu'aide au pilotage et à la navigation. Une telle représentation graphique synthétique est généralement aujourd'hui conforme à un niveau de criticité DAL C.

La présente invention a alors pour objet de proposer un procédé contributeur de la sécurisation d'une représentation graphique synthétique de la vue extérieure d'un aéronef, dont l'utilisation commune avec d'autres procédés ou bien d'autres moyens indépendants complémentaires permet de revendiquer une conformité de l'affichage à un niveau de criticité DAL A ou DAL B. Cette représentation graphique synthétique dispose ainsi d'un niveau de fiabilité, d'intégrité et de sûreté de fonctionnement suffisant pour être utilisée en tant qu'aide au pilotage et à la navigation.

Ces procédés ou moyens indépendants complémentaires permettant de revendiquer une conformité de l'affichage à un tel niveau de criticité sont par exemple un procédé ou un moyen de positionnement par satellites de l'aéronef, un procédé ou un moyen de détermination du cap et de l'attitude, tel qu'un moyen de type AHRS, ainsi qu'une base de données de l'environnement de l'aéronef. Une telle base de données de l'environnement de l'aéronef peut être une base de données de terrain, de navigation ou bien d'obstacles.

La présente invention a pour objet un procédé contributeur de la sécurisation d'une représentation graphique synthétique de la vue extérieure d'un aéronef, cet aéronef comportant au moins un moyen de visualisation sur lequel peuvent être affichées d'une part une vue au moins partielle en perspective de l'environnement de l'aéronef et d'autre part une symbologie de pilotage.

L'aéronef est caractérisé par trois directions privilégiées, les axes de roulis, de tangage et de lacet. L'axe de roulis est selon une direction longitudinale s'étendant de l'arrière de l'aéronef vers l'avant de l'aéronef, l'axe de lacet est selon une direction d'élévation s'étendant de bas en haut perpendiculairement à la direction longitudinale et l'axe de tangage est selon une direction transversale s'étendant de droite à gauche perpendiculairement aux directions longitudinale et d'élévation. De plus, le cap de l'aéronef correspond à l'axe de roulis de l'aéronef.

Au cours de ce procédé contributeur de la sécurisation d'une représentation graphique synthétique de la vue extérieure d'un aéronef,
- on détermine au moins le cap et l'attitude de l'aéronef et un point de référence Pr de l'aéronef caractérisé par des premières coordonnées dans un repère terrestre,
- on définit au moins un point de contrôle P₁,P₂,P₃ situé dans l'environnement de l'aéronef, chaque point de contrôle P₁,P₂,P₃ formant avec le point de référence Pr une première droite D_{P1},D_{P2},D_{P3}, la position de chaque première droite D_{P1},D_{P2},D_{P3} étant connue par rapport aux axes de roulis, de tangage et de lacet de l'aéronef,
- on calcule par une première fonction d'affichage F₁ les coordonnées d'affichage (a₁,b₁),(a₂,b₂),(a₃,b₃) de chaque point de contrôle P₁,P₂,P₃ sur le moyen de visualisation,
- on calcule par l'inverse (F₂)⁻¹ d'une seconde fonction d'affichage F₂ et à partir des coordonnées d'affichage (a₁,b₁),(a₂,b₂),(a₃,b₃) correspondant à chaque point de contrôle P₁,P₂,P₃ une seconde droite Dₛ₁,Dₛ₂,Dₛ₃ passant par le point de référence Pr de l'aéronef, la première fonction d'affichage F₁ et la seconde fonction d'affichage F₂ étant distinctes,
- on compare chaque première droite D_{P1},D_{P2},D_{P3} et chaque seconde droite Dₛ₁,Dₛ₂,Dₛ₃ correspondant à un même point de contrôle P₁,P₂,P₃, et
- on définit que la vue au moins partielle en perspective de l'environnement de l'aéronef est intègre si chaque première droite D_{P1},D_{P2},D_{P3} et chaque seconde droite D_{S1},D_{S2},D_{S3} correspondant à un même point de contrôle P₁,P₂,P₃ ont un écart angulaire inférieur ou égal à une marge prédéterminée.

Dans ces conditions, l'aéronef comporte un dispositif d'affichage de vision synthétique d'une représentation graphique synthétique de la vue extérieure d'un aéronef. Cette représentation graphique synthétique de la vue extérieure d'un aéronef est affichée sur au moins un moyen de visualisation que comporte l'aéronef et représente entre autres une vue au moins partielle en perspective de l'environnement extérieur de l'aéronef placée en arrière-plan d'une symbologie de pilotage. Cette vue au moins partielle en perspective de l'environnement extérieur de l'aéronef consiste en une représentation du relief environnant avec éventuellement des éléments particuliers tels que des terrains ou zones d'atterrissage, des bâtiments. Cette vue au moins partielle en perspective de l'environnement extérieur de l'aéronef est orientée en prenant en compte le cap et l'attitude de l'aéronef afin d'être représentative par exemple de la vision directe de l'environnement qu'a le pilote de l'aéronef à travers un pare-brise transparent de l'aéronef. Dans une autre représentation utilisée dans des phases de vol particulières de l'aéronef, la référence d'affichage peut être la route instantanée suivie par l'aéronef en lieu et place de son cap. Ce moyen de visualisation peut être par exemple un écran ou bien un dispositif d'affichage tête haute.

Le procédé selon l'invention utilise le cap et l'attitude de l'aéronef qui sont des informations nécessaires au pilote de l'aéronef afin de piloter efficacement et sereinement l'aéronef. Le cap et l'attitude de l'aéronef sont par exemple fournis par un instrument de type AHRS embarqué dans l'aéronef. Le cap est généralement caractérisé par une direction dans un repère terrestre et l'attitude par des angles par rapport aux axes de roulis, de tangage et de lacet de l'aéronef. Les directions de ces axes de roulis, de tangage et de lacet forment généralement un repère local lié à l'aéronef et sont également connus dans le repère terrestre grâce par exemple à l'instrument de type AHRS et à un moyen de positionnement par satellite embarqué dans l'aéronef.

En effet, grâce à ce moyen de détermination du cap et de l'attitude de type AHRS et à ce moyen de positionnement par satellite, la position et l'orientation du repère local lié à l'aéronef sont connues dans le repère terrestre. Par suite, il est possible de transposer les coordonnées d'un point quelconque d'un repère à l'autre. Le cap et l'attitude de l'aéronef sont donc connus dans le repère terrestre.

Le point de référence Pr de l'aéronef est un point fixe de l'aéronef qui peut être un point quelconque de l'aéronef ou bien un point particulier de l'aéronef tel que son centre de gravité, la position de la tête d'un occupant et du pilote en particulier ou bien le centre du dispositif d'affichage utilisé. Ce point de référence Pr est de préférence utilisé comme référence de l'affichage de la représentation graphique synthétique de la vue extérieure de l'aéronef. Ce point de référence Pr étant un point fixe de l'aéronef est connu dans un repère local lié à l'aéronef. Ce point de référence Pr peut d'ailleurs être le centre de ce repère local lié à l'aéronef et formé par exemple par les axes roulis, de tangage et lacet de l'aéronef. La position de ce point de référence Pr peut également être calculée dans le repère terrestre et caractérisé par des premières coordonnées dans ce repère terrestre.

Le procédé selon l'invention utilise également au moins un point de contrôle P₁,P₂,P₃, chaque point de contrôle P₁,P₂,P₃ correspondant à un point situé dans l'environnement de l'aéronef. Chaque point de contrôle P₁,P₂,P₃ est utilisé pour vérifier la fiabilité et la précision de la vue au moins partielle en perspective de l'environnement extérieur de l'aéronef. Chaque point de contrôle P₁,P₂,P₃ forme avec le point de référence Pr une première droite D_{P1},D_{P2},D_{P3}. La position et l'orientation de chaque première droite D_{P1},D_{P2},D_{P3} peut être connues dans le repère local lié à l'aéronef. De même, la position de chaque point de contrôle P₁,P₂,P₃ peut être connues dans le repère local lié à l'aéronef. De plus, la position de chaque point de contrôle P₁,P₂,P₃ et la position et l'orientation de chaque première droite D_{P1},D_{P2},D_{P3} peuvent être calculées dans le repère terrestre.

Chaque point de contrôle P₁,P₂,P₃ peut être un point connu d'une base de données stockée dans une mémoire embarquée dans l'aéronef, par exemple une base de données de terrain, de navigation ou bien d'obstacles. Cette mémoire peut être intégrée ou bien raccordée à un dispositif de navigation ou bien au dispositif d'affichage de vision synthétique. Les secondes coordonnées de chaque point de contrôle P₁,P₂,P₃ sont alors connues dans le repère terrestre par l'intermédiaire de cette base de données. Chaque point de contrôle P₁,P₂,P₃ forme ainsi avec le point de référence Pr une première droite D_{P1},D_{P2},D_{P3}. Chaque première droite D_{P1},D_{P2},D_{P3} est alors déterminée à partir des premières coordonnées du point de référence Pr et des secondes coordonnées de chaque point de contrôle P₁,P₂,P₃ dans le repère terrestre. Par suite, la position et l'orientation de chaque première droite D_{P} sont connues par rapport au cap de l'aéronef dans le repère terrestre. De plus, la position de chaque point de contrôle P₁,P₂,P₃ ainsi que la position et l'orientation de chaque première droite D_{P1},D_{P2},D_{P3} peuvent également être déterminés dans le repère local lié à l'aéronef.

Chaque point de contrôle P₁,P₂,P₃ peut également être défini par une première droite D_{P1},D_{P2},D_{P3} positionnée par rapport au cap de l'aéronef dans le repère local lié à l'aéronef et passant par le point de référence Pr de l'aéronef ainsi que par une distance L par rapport au point de référence Pr. De fait, chaque droite D_{P} peut être caractérisée par un angle suivant la direction du cap de l'aéronef. Les premières coordonnées du point de référence Pr et la position du cap de l'aéronef étant connues dans le repère local lié à l'aéronef, les secondes coordonnées de chaque point de contrôle P₁,P₂,P₃, situé respectivement sur chaque droite D_{P1},D_{P2},D_{P3} à une distance L du point de référence Pr, peuvent être déterminées dans ce repère local lié à l'aéronef. La distance L est de préférence la même selon chaque première droite D_{P}, bien qu'une distance L spécifique peut définie pour chaque première droite D_{P1},D_{P2},D_{P3}.

Par ailleurs, la position et l'orientation de chaque première droite D_{P1},D_{P2},D_{P3} ainsi que la position de chaque point de contrôle P₁,P₂,P₃ peuvent également être calculées dans le repère terrestre.

De préférence, les premières droites D_{P1},D_{P2},D_{P3} sont définies dans le champ de la vue au moins partielle en perspective de l'environnement de l'aéronef affiché sur le moyen de visualisation qui correspond généralement également au champ de vision du pilote. On entend par « champ de la vue au moins partielle en perspective de l'environnement de l'aéronef » la zone de l'environnement de l'aéronef qui est affiché sur le moyen de visualisation. En effet, pour afficher une telle vue au moins partielle en perspective de l'environnement de l'aéronef, un calculateur se limite généralement à ce champ de la vue au moins partielle en perspective de l'environnement afin de limiter les temps de calcul. C'est notamment le cas pour une représentation graphique synthétique de type SVS. De la sorte, seules des coordonnées présentes dans ce champ de cette vue au moins partielle en perspective peuvent être utilisées par le procédé selon l'invention.

Le procédé selon l'invention permet alors de calculer les coordonnées d'affichage (a₁,b₁),(a₂,b₂),(a₃,b₃) de chaque point de contrôle P₁,P₂,P₃ sur le moyen de visualisation par l'intermédiaire d'une première fonction d'affichage F₁. Chaque moyen de visualisation est généralement un afficheur de taille donnée et comporte généralement des pixels répartis en lignes horizontales et en colonnes verticales. De fait, tout élément représenté sur cet afficheur peut être caractérisé par des coordonnées d'affichage (x,y) dans un repère fixe lié à cet afficheur, x étant par exemple un numéro de colonne et y un numéro de ligne.

Par suite, chaque couple de coordonnées d'affichage (a₁,b₁),(a₂,b₂),(a₃,b₃) représente respectivement les points de contrôle P₁,P₂,P₃ affichés sur le moyen de visualisation en prenant en compte le cap et l'attitude de l'aéronef.

La première fonction d'affichage F₁ permet par exemple d'afficher sur le moyen de visualisation une représentation graphique du relief environnant l'aéronef et/ou d'éléments particuliers tel un terrain d'atterrissage à partir de leurs positions connues dans le repère terrestre. La première fonction d'affichage F₁ peut également permettre d'afficher une symbologie de pilotage sur le moyen de visualisation. Cette première fonction d'affichage F₁ prend en compte le cap et l'attitude de l'aéronef pour afficher cette représentation graphique du relief environnant l'aéronef afin d'être représentative de la vision du pilote.

Lorsque le point de référence Pr est la référence de l'affichage de la représentation graphique synthétique de la vue extérieure de l'aéronef, les coordonnées d'affichage (a₁,b₁),(a₂,b₂),(a₃,b₃) de chaque point de contrôle P₁, P₂, P₃ correspondent respectivement au point d'intersection entre chaque première droite D_{P1},D_{P2},D_{P3} et la scène extérieure synthétique représentée sur le moyen de visualisation.

On peut ensuite calculer par l'intermédiaire de l'inverse (F₂)⁻¹ d'une seconde fonction d'affichage F₂ et à partir des coordonnées d'affichage (a₁,b₁),(a₂,b₂),(a₃,b₃) de chaque point de contrôle P₁,P₂,P₃ une seconde droite D_{S} pour chaque point de contrôle P₁,P₂,P₃.

En effet, la seconde fonction d'affichage F₂ permet d'afficher par exemple sur le moyen de visualisation une symbologie de pilotage. Cette seconde fonction d'affichage F₂ prend également en compte le cap et l'attitude de l'aéronef pour afficher cette symbologie de pilotage.

Par suite, l'inverse (F₂)⁻¹ de la seconde fonction d'affichage F₂ peut permettre à partir d'un point C₁ affiché sur le moyen de visualisation connu par exemple par ses coordonnées d'affichage (x,y) de connaître au moins la droite D_{C} passant par le point de référence Pr et par le point C₂ de l'environnement de l'aéronef correspondant à ce point C₁ affiché sur le moyen de visualisation. De plus, si on connaît la distance entre le point C₂ et le point de référence Pr, alors la position de ce point C₂ peut être définie précisément sur cette droite Dc.

En outre, lorsque le point de référence Pr est la référence de l'affichage de la représentation graphique synthétique de la vue extérieure de l'aéronef, la droite Dc passe directement par le point de référence Pr et par le point C₁ affiché sur le moyen de visualisation.

Ainsi, chaque seconde droite Dₛ₁,Dₛ₂,Dₛ₃ passe par le point de référence Pr de l'aéronef et doit également passer par un point de contrôle P₁,P₂,P₃ correspondant à un couple de coordonnées d'affichage (a₁,b₁),(a₂,b₂),(a₃,b₃) sur le moyen de visualisation. De fait, la position et l'orientation de chaque seconde droite D_{S} sont connues dans le repère terrestre grâce à cette seconde fonction d'affichage F₂. Par suite, chaque seconde droite D_{S} peut alors être positionnée par rapport au cap de l'aéronef, les coordonnées du point de référence Pr ainsi que l'orientation du cap de l'aéronef étant connues dans le repère terrestre. De la sorte, on effectue avec la seconde fonction d'affichage F₂ un calcul inverse à celui effectué grâce à la première fonction d'affichage F1.

En outre, la position et l'orientation de chaque seconde droite D_{S} peuvent également être calculées dans le repère local lié à l'aéronef.

Ensuite, le procédé selon l'invention permet de comparer les premières et secondes droites D_{P},D_{S} passant par un même point de contrôle P₁,P₂,P₃. En effet, la première droite D_{P} et la seconde droite D_{S} passant par un même point de contrôle P₁,P₂,P₃ sont théoriquement confondues, car elles passent toutes les deux par le point de référence Pr et par un même point parmi les points de contrôle P₁,P₂,P₃.

Par contre, ces droites sont en fait proches, mais distinctes suite aux différentes approximations effectuées lors des étapes de calculs pour déterminer les coordonnées d'affichage (a₁,b₁),(a₂,b₂),(a₃,b₃) des points de contrôle P₁,P₂,P₃, puis la seconde droite D_{S1},D_{S2},D_{S3}.

En outre, le procédé contributeur de la sécurisation selon l'invention a pour objectif de constituer un élément contribuant à la validation de la représentation graphique synthétique de la vue extérieure d'un aéronef afin de permettre d'atteindre en association avec d'autres moyens indépendants complémentaires un niveau de fiabilité, d'intégrité et de sûreté de fonctionnement suffisant pour que cette représentation graphique synthétique soit utilisée en tant qu'une aide au pilotage et à la navigation. De fait, les première et seconde fonctions d'affichage F₁,F₂ sont distinctes afin d'avoir ainsi une dissimilarité au niveau de ces fonctions d'affichage F₁,F₂. Par suite, les calculs faits par la première fonction d'affichage F₁, puis par la seconde fonction d'affichage F₂ permettent d'avoir un niveau de fiabilité et d'intégrité supérieur à l'utilisation d'une seule et même fonction d'affichage F₁,F₂ commune.

De la sorte, les deux fonctions d'affichage F₁,F₂ étant distinctes, celles-ci peuvent avoir des résultats légèrement différents, suite aux formules, modes de calcul et/ou approximations possibles selon chaque fonction d'affichage F₁,F₂ bien que les résultats fournis par ces deux fonctions d'affichage F₁,F₂ soient corrects.

En conséquence, un écart angulaire peut exister entre les premières et secondes droites D_{P},D_{S} correspondant à un même point de contrôle P₁,P₂,P₃, cet écart angulaire se caractérisant par un angle entre la première droite D_{P} et la seconde droite D_{S}. On peut alors déterminer que si cet écart angulaire est inférieur ou égal à une marge prédéterminée, les deux fonctions d'affichage F₁,F₂ fournissent des résultats cohérents. A contrario, lorsque cet écart angulaire est supérieur à cette marge prédéterminée, les deux fonctions d'affichage F₁,F₂ fournissent des résultats incohérents.

La marge prédéterminée est déterminée comme étant l'écart angulaire maximal considéré comme acceptable sur la base des approximations mathématiques respectives des deux fonctions d'affichage F₁,F₂ et de leur temps de latence respectifs afin de considérer que les premières et secondes droites D_{P},D_{S} sont confondues. La marge prédéterminée a par exemple une valeur d'un degré (1°).

Par ailleurs, les deux fonctions d'affichage F₁,F₂ peuvent avoir des niveaux de sécurisation différents, une des fonctions d'affichage F₁,F₂ ayant un niveau de sécurisation supérieur à l'autre fonction d'affichage F₁,F₂. On peut alors considérer, si les deux fonctions d'affichage F₁,F₂ sont cohérentes, c'est-à-dire si l'écart angulaire entre les premières et secondes droites D_{P},D_{S} correspondant à un même point de contrôle P₁,P₂,P₃ est inférieur ou égal à la marge prédéterminée, que la fonction d'affichage F₁,F₂ ayant le niveau de sécurisation supérieur est un élément contributeur à l'amélioration de l'intégrité de l'autre fonction F₁,F₂. Associées avec d'autres moyens indépendants complémentaires, les deux fonctions d'affichage F₁,F₂ peuvent avantageusement être considérées comme ayant le niveau de sécurisation le plus élevé de ces deux fonctions d'affichage F₁,F₂, la seconde fonction d'affichage F₂ ayant par exemple le niveau de sécurisation le plus élevé validant ainsi la première fonction d'affichage F₁.

Par suite, lorsque les premières et secondes droites D_{P},D_{S} passant par un même point de contrôle P₁,P₂,P₃ sont cohérentes, c'est-à-dire si elles ont entre elles un écart angulaire inférieur ou égal à une marge prédéterminée, on peut définir alors que la vue au moins partielle en perspective de l'environnement de l'aéronef est correcte. De plus, suivant le niveau de sécurisation le plus haut atteint par une des fonctions d'affichage F₁,F₂, la vue au moins partielle en perspective de l'environnement de l'aéronef peut être définie comme intègre et fiable.

De préférence, une seule desdites fonctions d'affichage F₁,F₂ a un niveau de criticité DAL A ou DAL B. Avantageusement, et comme évoqué précédemment, on peut alors considérer que les deux fonctions d'affichage F₁,F₂ ont un niveau de criticité DAL A ou bien DAL B et en déduire que le procédé contributeur de la sécurisation d'une représentation graphique synthétique de la vue extérieure d'un aéronef selon l'invention contribue à un niveau de criticité DAL A ou bien DAL B.

Par suite, associées avec d'autres moyens indépendants complémentaires, cette représentation graphique synthétique de la vue extérieure d'un aéronef peut alors être utilisée en tant qu'aide au pilotage et à la navigation de l'aéronef, des niveaux de fiabilité, d'intégrité et de sûreté de fonctionnement suffisants étant atteints par le procédé contributeur de la sécurisation selon l'invention.

Selon un premier mode de réalisation de ce procédé contributeur de la sécurisation d'une représentation graphique synthétique de la vue extérieure d'un aéronef, la première fonction d'affichage F₁ est une fonction d'affichage de la vue au moins partielle en perspective de l'environnement de l'aéronef sur le moyen de visualisation et la seconde fonction d'affichage F₂ est une fonction d'affichage de la symbologie de pilotage sur le moyen de visualisation.

La première fonction d'affichage F₁ permet alors de calculer les coordonnées d'affichage (x,y) sur le moyen de visualisation de tous points de l'environnement selon les informations contenues dans au moins une base de données. Cette première fonction d'affichage F₁ effectue ce calcul des coordonnées d'affichage (x,y) en prenant en compte d'une part un angle de vision depuis le point de référence de l'affichage de la représentation graphique synthétique de la vue extérieure de l'aéronef, qui est de préférence le point de référence Pr et d'autre part le cap et l'attitude de l'aéronef. Cette première fonction d'affichage F₁ permet ainsi au pilote de l'aéronef d'avoir sur le moyen de visualisation une représentation graphique synthétique de la vue extérieure de l'aéronef cohérente avec la vue réelle qu'il peut avoir à travers le pare-brise transparent de l'aéronef.

La seconde fonction d'affichage F₂ permet par contre d'afficher sur le moyen de visualisation une symbologie de pilotage comprenant notamment une symbologie d'attitude représentant les angles d'assiette et d'inclinaison de l'aéronef obtenus par un moyen de détermination du cap et de l'attitude de type AHRS ainsi que des symbologies de pilotage, comme par exemple un vecteur vitesse de l'aéronef.

Selon un second mode de réalisation de ce procédé contributeur de la sécurisation selon l'invention, la première fonction d'affichage F₁ est une fonction d'affichage de la symbologie de pilotage sur le moyen de visualisation et la seconde fonction d'affichage F₂ est une fonction d'affichage de la vue au moins partielle en perspective de l'environnement de l'aéronef sur le moyen de visualisation.

Selon un mode de réalisation préféré de ce procédé contributeur de la sécurisation d'une représentation graphique synthétique de la vue extérieure d'un aéronef, la première fonction d'affichage F₁ est une fonction d'affichage de la vue au moins partielle en perspective de l'environnement de l'aéronef sur le moyen de visualisation de niveau de criticité DAL C alors que la seconde fonction d'affichage F₂ est une fonction d'affichage de la symbologie de pilotage sur le moyen de visualisation de niveau de criticité DAL A.

Enfin, lorsque la vue au moins partielle en perspective de l'environnement extérieur à l'aéronef n'est pas intègre, c'est-à-dire si l'écart angulaire entre les premières et secondes droites D_{P},D_{S} est supérieur à la marge prédéterminée, on modifie l'affichage de la vue au moins partielle en perspective sur le moyen de visualisation. Cette modification indique ainsi au pilote de l'aéronef que la vue au moins partielle en perspective de l'environnement extérieur à l'aéronef ne peut pas être utilisée en tant qu'aide au pilotage et à la navigation. Par exemple, la vue au moins partielle en perspective de l'environnement extérieur peut être grisée ou bien assombrie, voire non affichée. Cette vue peut alors être remplacée par une séparation de type horizon artificiel conventionnel ou encore un horizon artificiel à « large champ ».

Par contre, lorsque la vue au moins partielle en perspective de l'environnement extérieur à l'aéronef est intègre, c'est-à-dire si l'écart angulaire entre les premières et secondes droites D_{P},D_{S} est inférieur ou égal à la marge prédéterminée, on affiche la vue au moins partielle en perspective sur le moyen de visualisation. Le pilote de l'aéronef peut alors utiliser la vue au moins partielle en perspective de l'environnement extérieur à l'aéronef en tant qu'aide au pilotage et à la navigation.

Par ailleurs, on peut utiliser, au cours du procédé contributeur de la sécurisation selon l'invention, un ou plusieurs points de contrôle P₁,P₂,P₃ afin de vérifier l'intégrité de la vue au moins partielle en perspective de l'environnement extérieur de l'aéronef.

En effet, l'utilisation d'un seul point de contrôle P₁ permet de contrôler la fiabilité et la précision de l'affichage de ce point de contrôle P₁ de l'environnement sur la vue au moins partielle en perspective de l'environnement de l'aéronef. Si le résultat de ce contrôle est positif, on peut alors supposer que l'ensemble des points de l'environnement de l'aéronef situés sur cette première droite D_{P1} formée par ce point de contrôle P₁ et le point de référence Pr est également représenté de façon fiable et précise sur la vue au moins partielle en perspective de l'environnement de l'aéronef.

L'utilisation de plusieurs points de contrôle P₁,P₂,P₃ permet de contrôler la fiabilité et la précision de l'affichage de ces points de contrôle P₁,P₂,P₃ de l'environnement sur la vue au moins partielle en perspective de l'environnement de l'aéronef. Si le résultat de ce contrôle est positif pour l'ensemble de ces points de contrôle P₁,P₂,P₃, on peut alors supposer que l'ensemble des points de l'environnement de l'aéronef situés sur les premières droites D_{P1},D_{P2},D_{P3} formées par chaque point de contrôle P₁,P₂, P₃ et le point de référence Pr est également représenté de façon fiable et précise sur la vue au moins partielle en perspective de l'environnement de l'aéronef. Ces points de contrôle P₁,P₂,P₃ formant généralement avec le point de référence Pr des premières droites non coplanaires, on peut alors étendre ce résultat à l'ensemble des points de l'environnement de l'aéronef.

Cependant l'augmentation de ce nombre de points de contrôle P₁,P₂,P₃ s'accompagne d'une augmentation du temps de calcul nécessaire à ce contrôle ainsi que d'une utilisation de moyens de calcul qui peut éventuellement être préjudiciable à d'autres fonctions nécessitant également des moyens de calcul plus ou moins importants.

De préférence, trois points de contrôle P₁,P₂,P₃ sont choisis dans le champ de la de la vue au moins partielle en perspective de l'environnement de l'aéronef formant ainsi avec le point de référence Pr trois premières droites D_{P1},D_{P2},D_{P3} non coplanaires. Le procédé contributeur de la sécurisation d'une représentation graphique synthétique de la vue extérieure d'un aéronef constitue alors un élément contributeur de l'amélioration de l'intégrité de cette représentation graphique synthétique de la vue extérieure de l'aéronef. Ces trois points de contrôle P₁,P₂,P₃ peuvent être choisis aléatoirement dans ce champ de la vue au moins partielle en perspective de l'environnement de l'aéronef ou selon trois premières droites D_{P1},D_{P2},D_{P3} prédéfinies.

Selon un exemple dans lequel trois points de contrôle P₁,P₂,P₃ forment avec le point de référence Pr trois premières droites D_{P1},D_{P2},D_{P3} non coplanaires, un premier point de contrôle P₁ est situé sur une première droite D_{P1} située dans un plan contenant les axes de roulis et de tangage de l'aéronef et orientée selon un angle de -10° par rapport à l'axe de roulis dans ce plan. Un second point de contrôle P₂ est défini par une première droite D_{P2} située dans ce même plan et orienté selon un angle de +10° par rapport l'axe de roulis. Un troisième point de contrôle P₃ est défini par une première droite D_{P3} située dans un plan contenant les axes de roulis et de lacet de l'aéronef et orienté selon un angle de -10° par rapport à l'axe de roulis dans ce plan. Ces trois points P₁,P₂,P₃ sont situés à une distance L du point de référence Pr. La distance L a une valeur de 10 milles marins (10Nm).

Par ailleurs, le procédé selon l'invention peut comporter une phase de contrôle au cours de laquelle les points de contrôle P₁,P₂,P₃ sont choisis successivement afin de balayer l'ensemble de la vue au moins partielle en perspective de l'environnement de l'aéronef. Cette phase de contrôle permet de vérifier que cette vue au moins partielle en perspective est intègre dans sa totalité. Les points de de contrôle P₁,P₂,P₃ balayent l'ensemble de la vue au moins partielle en perspective dans un intervalle de temps donné qui est limité, cet intervalle de temps donné ayant par exemple une durée d'une seconde (1s).

La présente invention a aussi pour objet un dispositif d'affichage de vision synthétique d'un aéronef. Ce dispositif d'affichage de vision synthétique comporte au moins un moyen de visualisation, au moins une mémoire et au moins un moyen de calcul. La mémoire stocke des instructions de calcul et au moins une base de données de l'environnement de l'aéronef telle qu'une base de données de terrain, de navigation et/ou d'obstacles. Le dispositif d'affichage de vision synthétique est apte à être relié à au moins un moyen de positionnement de l'aéronef permettant notamment de déterminer au moins le cap et l'attitude de l'aéronef ainsi qu'un point de référence Pr de l'aéronef. Cet aéronef peut notamment comporter un moyen de positionnement par satellites et/ou un moyen de détermination du cap et de l'attitude de type AHRS.

Le dispositif d'affichage de vision synthétique permet alors d'afficher sur au moins un moyen de visualisation d'une part une vue au moins partielle en perspective de l'environnement de l'aéronef et d'autre part une symbologie de pilotage.

Le dispositif d'affichage de vision synthétique est de plus capable de mettre en oeuvre le procédé contributeur de la sécurisation d'une représentation graphique synthétique de la vue extérieure d'un aéronef précédemment décrit afin de sécuriser l'affichage de la vue au moins partielle en perspective de l'environnement de l'aéronef. En association avec d'autres moyens indépendants complémentaires, le dispositif d'affichage de vision synthétique et plus particulièrement la vue au moins partielle en perspective de l'environnement de l'aéronef peuvent alors être utilisés en tant qu'aide au pilotage et à la navigation de l'aéronef.

Un moyen de visualisation de ce dispositif d'affichage de vision synthétique peut être un écran disposé sur une planche de bord de l'aéronef ou bien un dispositif d'affichage tête haute. Un tel dispositif d'affichage tête haute est par exemple intégré au casque du pilote de l'aéronef, le moyen de visualisation étant alors un viseur clair fixé dans le cockpit, ou la visière du pilote, ou un élément optique disposé devant au moins un des yeux du pilote.

La présente invention a aussi pour objet un aéronef comportant un tel dispositif d'affichage de vision synthétique et au moins un moyen de positionnement.

L'invention et ses avantages apparaîtront avec plus de détails dans le cadre de la description qui suit avec des exemples de réalisation donnés à titre illustratif en référence aux figures annexées qui représentent :
- la figure 1, un aéronef équipé d'un dispositif d'affichage de vision synthétique,
- la figure 2, un dispositif d'affichage de vision synthétique,
- la figure 3, une représentation graphique synthétique de la vue extérieure d'un aéronef,
- la figure 4, une vue de l'aéronef, du moyen de visualisation et du relief environnant,
- la figure 5, un schéma synoptique d'un procédé contributeur de la sécurisation d'une représentation graphique synthétique de la vue extérieure d'un aéronef et
- les figures 6 et 7, deux vues du moyen de visualisation d'une variante de l'invention.

Les éléments présents dans plusieurs figures distinctes sont affectés d'une seule et même référence.

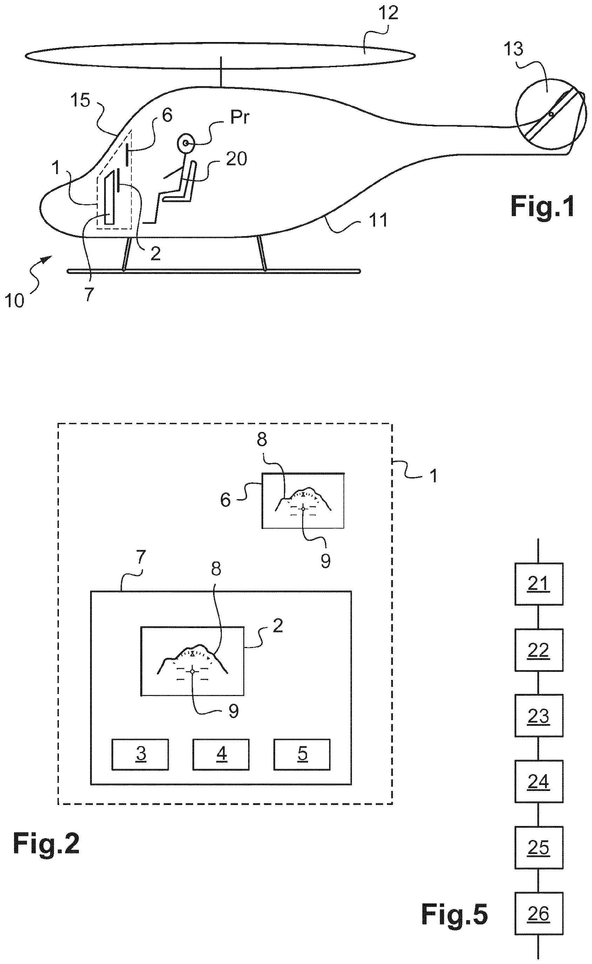

La figure 1 représente un aéronef 10 à voilure tournante comportant, outre un fuselage 11, un rotor principal 12 et un rotor arrière 13, un dispositif d'affichage de vision synthétique 1. Un pilote 20 est installé à bord de cet aéronef 10, et plus précisément à un poste de pilotage de cet aéronef 10 et peut regarder l'environnement extérieur de l'aéronef 10 à travers un pare-brise 15 transparent. Un tel dispositif d'affichage de vision synthétique 1 est représenté plus en détail sur la figure 2.

Ce dispositif d'affichage de vision synthétique 1 comporte plusieurs moyens de visualisation dont un écran principal 2 et un écran secondaire 6. Cet écran principal 2 est positionné sur une planche de bord 7 de l'aéronef 10 alors que l'écran secondaire 6 est positionné face à la tête du pilote 20 et constitue ainsi un dispositif tête haute. Le pilote 20 peut ainsi voir les informations affichées sur cet écran secondaire 6 sans tourner la tête et donc sans quitter du regard l'environnement extérieur de l'aéronef 10 à travers le pare-brise 15. Ce dispositif d'affichage de vision synthétique 1 comporte également une mémoire 3, un moyen de calcul 4 et un moyen de positionnement 5.

La mémoire 3 permet de stocker une ou plusieurs bases de données de l'environnement extérieur de l'aéronef 10 ainsi que des instructions de calcul. Ces instructions de calcul peuvent être sous la forme d'un programme informatique et sont utilisées par le moyen de calcul 4.

Le moyen de positionnement 5 comporte un moyen de positionnement par satellites et un moyen de détermination du cap et de l'attitude de type AHRS.

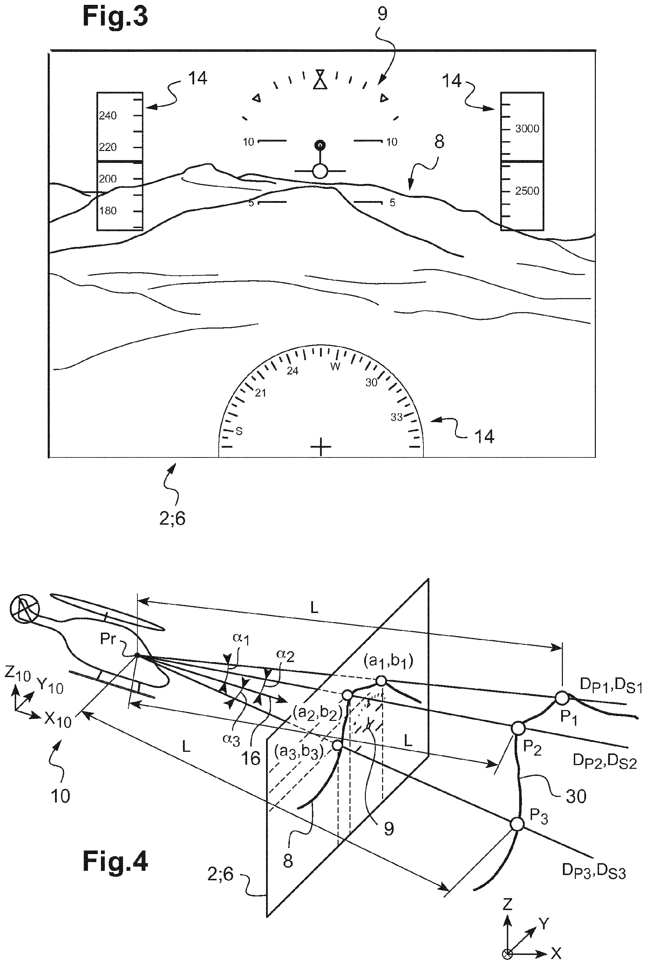

La figure 3 représente un exemple d'affichage du moyen de visualisation 2,6 sur lequel le pilote 20 de l'aéronef 10 peut voir d'une part une vue au moins partielle en perspective 8 de l'environnement extérieur de l'aéronef 10 et d'autre part une symbologie de pilotage 9 de l'aéronef 10. La vue au moins partielle en perspective 8 de l'environnement extérieur de l'aéronef 10 consiste en une représentation du relief environnant avec éventuellement des éléments particuliers tels que des terrains ou zones d'atterrissage, des bâtiments. Le pilote 20 peut également voir sur cet exemple d'affichage diverses informations 7 de vol et de navigation telles que l'altitude de l'aéronef 10 et son cap 16.

La vue au moins partielle en perspective 8 de l'environnement extérieur de l'aéronef 10 prend en compte le cap et l'attitude de l'aéronef 10, le cap 16 étant l'axe de roulis de l'aéronef 10 et son attitude correspondant à son inclinaison autour de ses axes de roulis, de tangage et de lacet. De plus, cette vue au moins partielle en perspective 8 utilise un point de référence Pr correspondant à la référence de l'affichage de cette vue. Ce point de référence Pr est situé au niveau de la tête du pilote 20 de l'aéronef 10 comme représenté sur la figure 1. Ainsi, la vue au moins partielle en perspective 8 est représentative de la vision directe qu'a le pilote 20 de l'environnement extérieur de l'aéronef 10 à travers le pare-brise 15.

La figure 4 représente une vue en perspective de l'aéronef 10, du moyen de visualisation 2,6 et du relief 30 environnant l'aéronef 10 et se trouvant plus particulièrement devant l'aéronef 10. Un repère terrestre (X,Y,Z) est attaché au relief 30. Un repère local (X1₀,Y₁₀,Z₁₀) attaché à l'aéronef 10 est par ailleurs formé par les directions des axes de roulis X₁₀, de tangage Y₁₀ et de lacet Z₁₀ de l'aéronef 10.

La figure 5 représente un schéma synoptique d'un procédé contributeur de la sécurisation d'une représentation graphique synthétique de la vue extérieure de l'aéronef 10. Ce procédé contributeur de la sécurisation permet, en association avec d'autres moyens indépendants complémentaires, de vérifier l'intégrité de la représentation graphique synthétique affichée par le dispositif d'affichage de vision synthétique 1 et comporte six étapes successives.

Ces moyens indépendants complémentaires sont par exemple le moyen de positionnement par satellites et le moyen de détermination du cap et de l'attitude de type AHRS que comporte le moyen de positionnement 5 ainsi que la ou les bases de données de l'environnement extérieur de l'aéronef 10 stockées dans la mémoire 3.

Au cours d'une première étape 21, on détermine le cap 16 et l'attitude de l'aéronef 10 par l'intermédiaire du moyen de détermination du cap et de l'attitude de type AHRS et le point de référence Pr par l'intermédiaire du moyen de positionnement par satellites. Le cap 16, l'attitude de l'aéronef 10 et le point de référence Pr sont donc connus aussi bien dans le repère local (X₁₀,Y₁₀,Z₁₀) de l'aéronef 10 que dans le repère terrestre (X,Y,Z) grâce au moyen de positionnement 5.

En effet, grâce au moyen de positionnement 5, la position et l'orientation du repère local (X₁₀,Y₁₀,Z₁₀) dans le repère terrestre (X,Y,Z) sont connues. Il est alors possible de transposer les coordonnées d'un point quelconque d'un repère à l'autre.

Au cours d'une seconde étape 22, on définit trois points de contrôle P₁,P₂,P₃ situés dans l'environnement de l'aéronef 10. Chaque point de contrôle P₁,P₂,P₃ se trouve respectivement sur une première droite D_{P1},D_{P2},D_{P3} passant par le point de référence Pr. La position de chaque première droite D_{P1},D_{P2},D_{P3} est connue par rapport au cap 16 dans le repère local (X₁₀,Y₁₀,Z₁₀). Par exemple, les premières droites D_{P1},D_{P3} sont situées dans un plan horizontal du repère local (X₁₀,Y₁₀,Z₁₀), formant respectivement un angle α₁,α₃ avec la direction du cap 16, et la première droite D_{P2} est située dans un plan vertical du repère local (X₁₀,Y₁₀,Z₁₀) passant par la direction du cap 16, formant un angle α₂ avec cette direction du cap 16. Les trois premières droites D_{P1},D_{P2},D_{P3} sont non coplanaires.

Par suite, les trois points de contrôle P₁,P₂,P₃ sont connus dans le repère local (X₁₀,Y₁₀,Z₁₀). De même, chaque première droite D_{P1},D_{P2},D_{P3}, et chaque point de contrôle P₁,P₂,P₃, peuvent également être transposés et caractérisés dans le repère terrestre (X,Y,Z).

De préférence, les premières droites D_{P1},D_{P2},D_{P3} se trouvent dans le champ de la vue au moins partielle en perspective 8.

Cependant, les points de contrôle P₁,P₂,P₃ peuvent être des points issus d'une base de données stockée dans la mémoire 3 et ainsi connus dans le repère terrestre (X,Y,Z). Chaque première droite D_{P1},D_{P2},D_{P3}, passant par le point de référence Pr et respectivement un point de contrôle P₁,P₂,P₃, peut alors être caractérisée dans le repère terrestre (X,Y,Z).

Au cours d'une troisième étape 23, on calcule par une première fonction d'affichage F₁ les coordonnées d'affichage (a₁,b₁),(a₂,b₂),(a₃,b₃) de chaque point de contrôle P₁,P₂,P₃ sur le moyen de visualisation 2,6. La première fonction d'affichage F₁ est une fonction d'affichage de la vue au moins partielle en perspective 8 de l'environnement de l'aéronef 10 sur le moyen de visualisation 2,6.

Au cours d'une quatrième étape 24, on calcule par l'inverse (F₂)⁻¹ d'une seconde fonction d'affichage F₂ et à partir des coordonnées d'affichage (a₁,b₁),(a₂,b₂),(a₃,b₃) trois secondes droites D_{S1},D_{S2},D_{S3} passant par ledit point de référence Pr et respectivement par un point de contrôle P₁,P₂,P₃. La seconde fonction d'affichage F₂ est une fonction d'affichage de la symbologie de pilotage 9 sur le moyen de visualisation 2,6. De plus, la première fonction d'affichage F₁ et la seconde fonction d'affichage F₂ sont des fonctions d'affichage distinctes afin d'avoir une dissimilarité au niveau de ces fonctions d'affichage F₁,F₂. Par ailleurs, la première fonction d'affichage F₁ a un niveau de criticité DAL C alors que la seconde fonction d'affichage F₂ a un niveau de criticité DAL A.

Au cours d'une cinquième étape 25, on compare la première droite D_{P1},D_{P2},D_{P3} et la seconde droite Dₛ₁,Dₛ₂,Dₛ₃ passant par un même point de contrôle P₁,P₂,P₃, afin de vérifier si l'écart angulaire entre cette première droite D_{P1},D_{P2},D_{P3} et cette seconde droites D_{S1},D_{S2},D_{S3} est supérieur à une marge prédéterminée.

En effet, suite à différentes approximations de calcul et à l'utilisation de deux fonctions d'affichage F₁,F₂ distinctes, une première droite D_{P1},D_{P2},D_{P3} et une seconde droite Dₛ₁,Dₛ₂,Dₛ₃ passant théoriquement par un même point de contrôle P₁,P₂,P₃ et par le point de référence Pr peuvent ne pas être confondues. La marge prédéterminée prend alors en compte ces différentes approximations de calcul et l'utilisation de deux fonctions d'affichage F₁,F₂ distinctes.

Enfin, au cours d'une sixième étape 26, on définit que la vue au moins partielle en perspective 8 de l'environnement de l'aéronef 10 est intègre si la première droite D_{P1},D_{P2},D_{P3} et la seconde droite Dₛ₁,Dₛ₂,Dₛ₃ passant par un même point de contrôle P₁,P₂,P₃ ont un écart angulaire inférieur ou égal à cette marge prédéterminée.

En effet dans ce cas, la première droite D_{P1},D_{P2},D_{P3} et la seconde droite Dₛ₁,Dₛ₂,Dₛ₃ passant par un même point de contrôle P₁,P₂,P₃ peuvent être considérées comme confondues. Par suite, on en déduit que les deux fonctions d'affichage F₁,F₂ fournissent des résultats cohérents. Ainsi, la seconde fonction d'affichage F₂ qui a un niveau de criticité DAL A constitue un élément contributeur à la conformité de la première fonction d'affichage F₁ au niveau de criticité DAL A, bien que son niveau de criticité soit inférieur.

De la sorte, la vue au moins partielle en perspective 8 de l'environnement de l'aéronef 10 déterminée par la première fonction d'affichage F₁ est validée par la seconde fonction d'affichage F₂ qui a un niveau de criticité DAL A. On peut alors considérer, en association avec d'autres moyens indépendants complémentaires, que la vue au moins partielle en perspective 8 de l'environnement de l'aéronef 10 a un niveau de criticité DAL A et peut être utilisée comme une aide au pilotage et à la navigation par le pilote 20.

La vue au moins partielle en perspective 8 est donc affichée normalement sur le moyen de visualisation 2,6. Le pilote 20 de l'aéronef 10 sait alors qu'il peut utiliser cette vue au moins partielle en perspective 8 de l'environnement extérieur à l'aéronef 10 en tant qu'aide au pilotage et à la navigation.

Par contre, lorsque la vue au moins partielle en perspective 8 de l'environnement extérieur à l'aéronef 10 n'est pas intègre, c'est-à-dire si l'écart angulaire entre une première droite D_{P1},D_{P2},D_{P3} et une seconde droite Dₛ₁,Dₛ₂,Dₛ₃ passant par un même point de contrôle P₁,P₂,P₃ est supérieur à la marge prédéterminée, l'affichage de la vue au moins partielle en perspective 8 sur le moyen de visualisation 2,6 est modifiée afin d'informer le pilote 20. Par exemple, la vue au moins partielle en perspective 8 de l'environnement extérieur peut être grisée ou bien assombrie, voire non affichée.

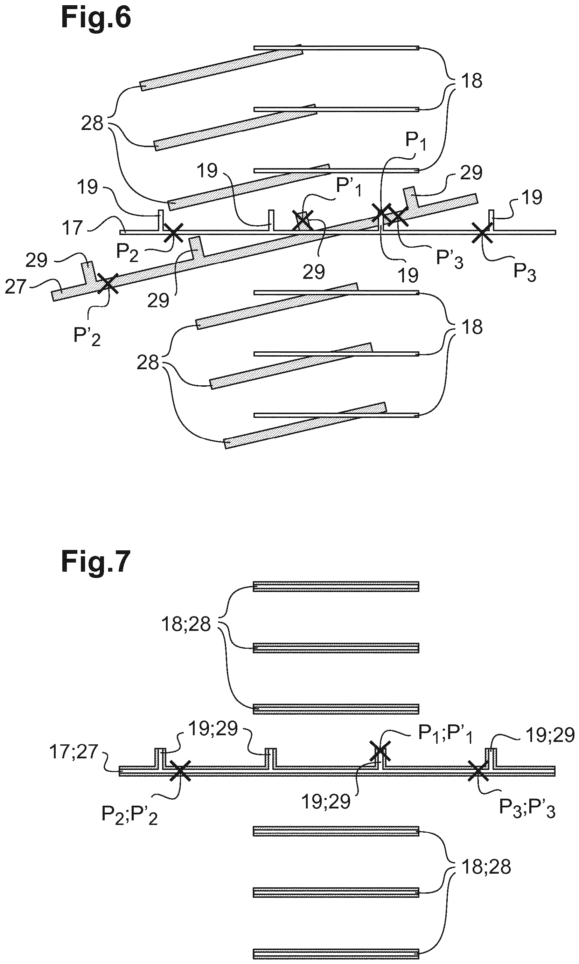

Sur les figures 6 et 7 sont représentés des affichages sur un moyen de visualisation 2,6 d'une variante de l'invention. Selon cette variante, les fonctions d'affichage F₁,F₂ permettent d'afficher simultanément deux fois les même éléments représentant une ligne d'horizon artificiel 17,27, des repères d'assiette 18,28 et des repères de cap 19,29 sur chaque ligne d'horizon artificiel 17,27. Ces éléments sont orientés par rapport au cap 16 et à l'assiette de l'aéronef 10 et sont affichés avec une couleur spécifique.

Dans cette variante, les points de contrôle P₁,P₂,P₃ sont des points particuliers. En effet, un premier point de contrôle P₁ est situé sur le cap de l'aéronef 10, c'est-à-dire son axe de roulis X₁₀ dans le repère locale (X₁₀,Y₁₀,Z₁₀) lié à l'aéronef 10 alors que deux autres points de contrôle P₂,P₃ sont situés sur une ligne d'horizon artificiel dans le repère locale (X₁₀,Y₁₀,Z₁₀), c'est-à-dire l'axe de tangage Y₁₀. De fait, les point de contrôle P₁,P₂,P₃ sont connus dans ce repère locale (X₁₀,Y₁₀,Z₁₀) et peuvent être transposés dans le repère terrestre (X,Y,Z). Ces points de contrôle P₁,P₂,P₃ sont situés à une première distance L1 quelconque mais prédéfinie du point de référence Pr.

La première fonction d'affichage F₁ permet alors de déterminer les coordonnées d'affichage (a₁,b₁),(a₂,b₂),(a₃,b₃) de chaque point de contrôle P₁,P₂,P₃ sur le moyen de visualisation 2,6. La première ligne d'horizon artificiel 17, les premiers repères d'assiette 18 et les premiers repères de cap 19 peuvent alors être affichés.

La première ligne d'horizon artificiel 17 est un segment passant par les coordonnées d'affichage (a₂,b₂),(a₃,b₃) correspondant aux deux points de contrôle P₂,P₃, les premiers repères d'assiette 18 étant équidistants et parallèles à cette première ligne d'horizon artificiel 17. Les premiers repères de cap 19 sont des segments équidistants et parallèles à une direction perpendiculaire à la première ligne d'horizon artificiel 17 et passant par les coordonnées d'affichage (a₁,b₁) du premier point de contrôle P₁.

L'inverse (F₂)⁻¹ de la seconde fonction d'affichage F₂ permet ensuite de déterminer tout d'abord des secondes droites Ds₁,Ds₂,Ds₃ passant par le point de référence Pr et respectivement les coordonnées d'affichage (a₁,b₁),(a₂,b₂),(a₃,b₃) correspondant à chaque point de contrôle P₁,P₂,P₃. Puis, des points complémentaires P'₁,P'₂,P'₃ situés respectivement sur chaque seconde droite Dₛ₁,Dₛ₂,Dₛ₃ à une seconde distance L2 quelconque mais prédéfinie du point de référence Pr sont déterminés, les positions de ces points complémentaires P'₁,P'₂,P'₃ étant connues aussi bien dans le repère locale (X₁₀,Y₁₀,Z₁₀) que dans le repère terrestre (X,Y,Z). Cette seconde distance L2 peut être égale à la première distance L1.

Enfin, la première fonction d'affichage F₁ permet de déterminer les coordonnées d'affichage complémentaires (a'₁,b'₁),(a'₂,b'₂),(a'₃,b'₃) de chaque point complémentaires P'₁,P'₂,P'₃ sur le moyen de visualisation 2,6. La seconde ligne d'horizon artificiel 27, les seconds repères d'assiette 28 et les seconds repères de cap 29 peuvent alors être affichés.

La seconde ligne d'horizon artificiel 27 est un segment passant par les coordonnées d'affichage complémentaires (a'₂,b'₂),(a'₃,b'₃) correspondant aux deux points complémentaires P'₂,P'₃, les seconds repères d'assiette 28 étant équidistants et parallèles à cette seconde ligne d'horizon artificiel 27. Les seconds repères de cap 29 sont des segments équidistants et parallèles à une direction perpendiculaire à la seconde ligne d'horizon artificiel 27 et passant par les coordonnées d'affichage complémentaires (a'₁,b'₁) du premier point complémentaire P'₁.

Ainsi, en comparant les première et seconde lignes d'horizon artificiel 17,27, les premiers et seconds repères d'assiette 18,28 et les premiers et seconds repères de cap 19,29, il est possible de vérifier la cohérence des fonctions d'affichage F₁,F₂ et, par suite, d'en déduire que les deux fonctions d'affichage F₁,F₂ ont un niveau de criticité qui est le niveau de criticité le plus élevé de ces deux fonctions d'affichage F₁,F₂.

Sur la figure 6, le moyen de visualisation 2,6 affiche des éléments 17,18,19 issus de la première fonction d'affichage F₁ et des éléments 27,28,29 issus de la seconde fonction d'affichage F₂ qui sont distincts. De fait, les résultats des fonctions d'affichage F₁,F₂ ne sont pas cohérents entre eux.

Sur la figure 7, les éléments 17,18,19 issus de la première fonction d'affichage F₁ et les éléments 27,28,29 issus de la seconde fonction d'affichage F₂ sont confondus, signifiant que dans ce cas, les fonctions d'affichage F₁,F₂ sont bien cohérentes entre elles car elles donnent des résultats identiques.

De plus, les éléments 27,28,29 issus de la seconde fonction d'affichage F₂ sont représentés avec des traits plus épais. Ainsi, les éléments 27,28,29 issus de la seconde fonction d'affichage F₂ constituent un détourage des éléments 17,18,19 affichés par la première fonction d'affichage F₁ lorsque ces deux fonctions d'affichage F₁,F₂ sont cohérentes.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

Par exemple, les fonctions d'affichage F₁,F₂ peuvent être interverties, la première fonction d'affichage F₁ étant une fonction d'affichage de la symbologie de pilotage 9 et la seconde fonction d'affichage F₂ étant une fonction d'affichage de la vue au moins partielle en perspective 8 de l'environnement de l'aéronef 10 sur le moyen de visualisation 2,6.

De même, les niveaux de criticité de chaque fonction d'affichage F₁,F₂ peuvent être intervertis et/ou être différents.

## Revendications

1. Procédé contributeur de la sécurisation d'lune représentation graphique synthétique de la vue extérieure d'un aéronef (10), ledit aéronef (10) comportant au moins un moyen de visualisation (2,6) sur lequel peuvent être affichées d'une part une vue au moins partielle en perspective (8) de l'environnement dudit aéronef (10) et d'autre part une symbologie de pilotage (9) dudit aéronef (10), un axe de roulis (X₁₀) s'étendant de l'arrière dudit aéronef (10) vers l'avant dudit aéronef (10), un axe de lacet (Z₁₀) s'étendant de bas en haut perpendiculairement audit axe de roulis (X₁₀) et un axe de tangage (Y₁₀) s'étendant de droite à gauche perpendiculairement auxdits axes de roulis (X₁₀) et de lacet (Z₁₀), formant un repère local (X₁₀,Y₁₀,Z₁₀) lié audit aéronef (10),
**caractérisé en ce que**,
- on détermine au moins le cap et l'attitude dudit aéronef (10) et un point de référence (Pr) dudit aéronef (10),
- on définit au moins un point de contrôle (P₁,P₂,P₃) situé dans ledit environnement dudit aéronef (10), chaque point de contrôle (P₁,P₂,P₃) formant avec ledit point de référence (Pr) une première droite (D_{P1},D_{P2},D_{P3}), la position de chaque première droite (D_{P1},D_{P2},D_{P3}) étant connue dans ledit repère local (X₁₀,Y₁₀,Z₁₀) lié audit aéronef (10),
- on calcule par une première fonction d'affichage (F₁) les coordonnées d'affichage (a₁,b₁),(a₂,b₂),(a₃,b₃) de chaque point de contrôle (P₁,P₂,P₃) sur ledit moyen de visualisation (2,6),
- on calcule par l'inverse ((F₂)⁻¹) d'une seconde fonction d'affichage (F₂) et à partir desdites coordonnées d'affichage (a₁,b₁),(a₂,b₂),(a₃,b₃) une seconde droite (D_{S1},D_{S2},D_{S3}) pour chaque point de contrôle (P₁,P₂,P₃), chaque seconde droite (D_{S1},D_{S2},D_{S3}) passant par ledit point de référence (Pr) dudit aéronef (10), ladite première fonction d'affichage (F₁) et ladite seconde fonction d'affichage (F₂) étant distinctes,
- on compare chaque première droite (D_{P1},D_{P2},D_{P3}) et chaque seconde droite (D_{S1},D_{S2},D_{S3}) correspondant à un même point de contrôle (P₁,P₂,P₃),
- on définit que ladite vue au moins partielle en perspective (8) de l'environnement dudit aéronef (10) est intègre si chaque première droite (D_{P1},D_{P2},D_{P3}) et chaque seconde droite (D_{S1},D_{S2},D_{S3}) correspondant à un même point de contrôle (P₁,P₂,P₃) ont un écart angulaire inférieur ou égal à une marge prédéterminée.

2. Procédé selon la revendication 1,
**caractérisé en ce que** chaque point de contrôle (P₁,P₂,P₃) est défini dans ledit repère local (X₁₀,Y₁₀,Z₁₀), puis on calcule la position de chaque point de contrôle (P₁,P₂,P₃) dans un repère terrestre (X,Y,Z).

3. Procédé selon l'une quelconque des revendications 1 à 2,
**caractérisé en ce que** l'on définit trois points de contrôle (P₁,P₂,P₃) formant avec ledit point de référence (Pr) trois premières droites (D_{P1},D_{P2},D_{P3}) non coplanaires.

4. Procédé selon l'une quelconque des revendications 1 à 3,
**caractérisé en ce que** chaque point de contrôle (P₁,P₂,P₃) est **caractérisé par** ladite première droite (D_{P1},D_{P2},D_{P3}) correspondant audit point de contrôle positionnée par rapport audit axe longitudinal de roulis (X₁₀) et passant par ledit point de référence (Pr) et par une distance L dudit point de référence (Pr).

5. Procédé selon l'une quelconque des revendications 1 à 3, **caractérisé en ce que** ledit point de référence (Pr) est **caractérisé par** des premières coordonnées dans un repère terrestre (X,Y,Z) et chaque point de contrôle (P₁,P₂,P₃) est un point connu d'une base de données dont des secondes coordonnées sont connues dans ledit repère terrestre (X,Y,Z), ladite première droite (D_{P1},D_{P2},D_{P3}) correspondant à un point de contrôle (P₁,P₂,P₃) étant déterminée à partir desdites premières coordonnées dudit point de référence (Pr) et desdites secondes coordonnées dudit point de contrôle (P₁,P₂,P₃).

6. Procédé selon l'une quelconque des revendications 1 à 5,
**caractérisé en ce que** chaque point de de contrôle (P₁,P₂,P₃) est choisi dans le champ de ladite vue au moins partielle en perspective (8).

7. Procédé selon l'une quelconque des revendications 1 à 2,
**caractérisé en ce que** chaque point de de contrôle (P₁,P₂,P₃) est choisi afin de balayer ladite vue au moins partielle en perspective (8) dans un intervalle de temps donné.

8. Procédé selon l'une quelconque des revendications 1 à 7,
**caractérisé en ce que**, lorsque ladite vue au moins partielle en perspective (8) n'est pas intègre, on modifie l'affichage de ladite vue au moins partielle en perspective (8) sur ledit moyen de visualisation (2,6) afin d'informer un pilote dudit aéronef (10).

9. Procédé selon l'une quelconque des revendications 1 à 8,
**caractérisé en ce que** ladite première fonction d'affichage (F₁) est une fonction d'affichage de ladite vue au moins partielle en perspective (8) dudit environnement dudit aéronef (10) sur ledit moyen de visualisation (2,6) et ladite seconde fonction d'affichage (F₂) est une fonction d'affichage de ladite symbologie de pilotage (9) sur ledit moyen de visualisation (2,6).

10. Procédé selon l'une quelconque des revendications 1 à 8,
**caractérisé en ce que** ladite première fonction d'affichage (F₁) est une fonction d'affichage de ladite symbologie de pilotage (9) sur ledit moyen de visualisation (2,6) et ladite seconde fonction d'affichage (F₂) est une fonction d'affichage de ladite vue au moins partielle en perspective (8) dudit environnement dudit aéronef (10) sur ledit moyen de visualisation (2,6).

11. Procédé selon l'une quelconque des revendications 1 à 10,
**caractérisé en ce qu'**une desdites fonctions d'affichage (F₁,F₂) a un niveau de sécurisation supérieur à l'autre fonction d'affichage (F₁, F₂).

12. Procédé selon l'une quelconque des revendications 1 à 11,
**caractérisé en ce qu'**une desdites fonctions d'affichage (F₁,F₂) a un niveau de criticité indifféremment DAL A ou DAL B.

13. Procédé selon l'une quelconque des revendications 1 à 12,
**caractérisé en ce que** ledit point de référence (Pr) est le point de référence dudit affichage de ladite représentation graphique synthétique de ladite vue extérieure dudit aéronef (10).

14. Procédé selon la revendication 3,
**caractérisé en ce que** ledit premier point de contrôle (P₁) étant situé sur ledit axe de roulis dudit aéronef (10) et lesdits points de contrôle (P₂,P₃) étant situés sur ledit axe de tangage (Y₁₀) à une première distance L1 dudit point de référence (Pr),
- on affiche une première ligne d'horizon artificiel (17), des premiers repères d'assiette (18) et des premiers repères de cap (19) sur ledit moyen de visualisation (2,6) à partir desdites coordonnées d'affichage (a₁,b₁), (a₂,b₂) ,(a₃,b₃) de chaque point de contrôle (P₁,P₂,P₃), ladite première ligne d'horizon artificiel (17) passant par lesdites coordonnées d'affichage (a₂,b₂),(a₃,b₃) correspondant auxdits points de contrôle (P₂,P₃), lesdits premiers repères d'assiette (18) étant équidistants et parallèles à ladite première ligne d'horizon artificiel (17) et lesdits premiers repères de cap (19) étant des segments équidistants et parallèles à une direction perpendiculaire à ladite première ligne d'horizon artificiel (17) et passant par lesdites coordonnées d'affichage (a₁,b₁) dudit premier point de contrôle (P₁),
- on détermine des points complémentaires (P'₁,P'₂,P'₃) par l'intermédiaire de l'inverse ((F₂)⁻¹) de ladite seconde fonction d'affichage (F₂), lesdits points complémentaires (P'₁,P'₂,P'₃) se trouvant sur lesdites secondes droites (D_{S1},D_{S2},D_{S3}) à une seconde distance L2 dudit point de référence (Pr),
- on détermine des coordonnées d'affichage complémentaires (a'₁,b'₁),(a'₂,b'₂),(a'₃,b'₃) de chaque point complémentaires (P'₁,P'₂,P'₃) sur le moyen de visualisation (2,6) par ladite première fonction d'affichage (F₁), et
- on affiche une seconde ligne d'horizon artificiel (27), des seconds repères d'assiette (28) et des seconds repères de cap (29) sur ledit moyen de visualisation (2,6) à partir desdites coordonnées d'affichage complémentaires (a'₁,b'₁),(a'₂,b'₂),(a'₃,b'₃), ladite seconde ligne d'horizon artificiel (27) passant par lesdites coordonnées d'affichage complémentaires (a'₂,b'₂),(a'₃,b'₃) correspondant auxdits points complémentaires (P'₂,P'₃), lesdits seconds repères d'assiette (28) étant équidistants et parallèles à ladite seconde ligne d'horizon artificiel (27), lesdits seconds repères de cap (29) étant des segments parallèles à une direction perpendiculaire à ladite seconde ligne d'horizon artificiel (27) et passant par lesdites coordonnées d'affichage complémentaires (a'₁,b'₁) dudit premier point complémentaire (P'₁).

15. Dispositif d'affichage de vision synthétique (1) d'un aéronef (10), ledit dispositif d'affichage de vision synthétique (1) comportant au moins un moyen de visualisation (2,6), au moins une mémoire (3) et au moins un moyen de calcul (4), ladite mémoire (3) stockant au moins une base de données de l'environnement dudit aéronef (10) et des instructions de calcul, ledit dispositif d'affichage de vision synthétique (1) permettant d'afficher sur au moins un moyen de visualisation (2,6) d'une part une vue au moins partielle en perspective (8) de l'environnement dudit aéronef (10) et d'autre part une symbologie de pilotage (9), ledit dispositif d'affichage de vision synthétique (1) étant apte à être relié à au moins un moyen de positionnement (5) dudit aéronef (10) permettant de déterminer au moins le cap et l'attitude dudit aéronef (10) ainsi qu'un point de référence (Pr) dudit aéronef (10), un axe de roulis (X₁₀) s'étendant de l'arrière dudit aéronef (10) vers l'avant dudit aéronef (10), un axe de lacet (Z₁₀) s'étendant de bas en haut perpendiculairement audit axe de roulis (X₁₀) et un axe de tangage (Y₁₀) s'étendant de droite à gauche perpendiculairement auxdits axes de roulis (X₁₀) et de lacet (Z₁₀), formant un repère local (X₁₀,Y₁₀,Z₁₀) lié audit aéronef (10),
**caractérisé en ce que** ledit dispositif d'affichage de vision synthétique (1) est capable de mettre en oeuvre le procédé contributeur de la sécurisation d'une représentation graphique synthétique de la vue extérieure d'un aéronef (10) selon les revendications 1 à 14 afin de sécuriser l'affichage de ladite vue au moins partielle en perspective (8) de l'environnement dudit aéronef (10).

16. Aéronef (10) comportant un dispositif d'affichage de vision synthétique (1) et au moins un moyen de positionnement (5),
**caractérisé en ce que** ledit dispositif d'affichage de vision synthétique (1) est selon la revendication 15.

## Patentansprüche

1. Verfahren, das zur Sicherung der synthetischen graphischen Darstellung der Sicht aus einem Luftfahrzeug (10) nach draußen beiträgt, wobei das Luftfahrzeug (10) mindestens ein Anzeigemittel (2, 6) aufweist, auf dem einerseits eine mindestens teilweise perspektivische Ansicht (8) der Umgebung des Luftfahrzeugs (10) und andererseits eine Flugsteuerungssymbologie (9) des Luftfahrzeugs (10), eine Rollachse (X₁₀), die sich von dem hinteren Teil des Luftfahrzeugs (10) zum vorderen Teil des Luftfahrzeugs (10) erstreckt, eine Gierachse (Z₁₀), die sich von unten nach oben senkrecht zu der Rollachse (X₁₀) erstreckt, und eine Nickachse (Y₁₀), die sich von rechts nach links senkrecht zu der Rollachse (X₁₀) und der Gierachse (Z₁₀) erstreckt, die ein mit dem Luftfahrzeug (10) verknüpftes lokales Bezugssystem (X₁₀, Y₁₀, Z₁₀) bilden, angezeigt werden können, **dadurch gekennzeichnet, dass**
- mindestens der Kurs und die Position des Luftfahrzeugs (10) und ein Bezugspunkt (Pr) des Luftfahrzeugs (10) bestimmt werden,
- mindestens ein Kontrollpunkt (P₁, P₂, P₃) definiert wird, der in der Umgebung des Luftfahrzeugs (10) liegt, wobei jeder Kontrollpunkt (P₁, P₂, P₃) mit dem Bezugspunkt (Pr) eine erste Gerade (DP₁, D_{P2}, D_{P3}) bildet, wobei die Lage jeder Geraden (DP₁, D_{P2}, D_{P3}) in dem lokalen Bezugssystem (X₁₀, Y₁₀, Z₁₀), das mit dem Luftfahrzeug (10) verknüpft ist, bekannt ist,
- durch eine erste Anzeigefunktion (F₁) die Anzeigekoordinaten (a₁, b₁), (a₂, b₂), (a₃, b₃) eines jeden Kontrollpunkts (P₁, P₂, P₃) auf dem Anzeigemittel (2, 6) berechnet werden,
- durch den Kehrwert ((F₂)⁻¹) einer zweiten Anzeigefunktion (F₂) und ausgehend von den Anzeigekoordinaten (a₁, b₁), (a₂, b₂), (a₃, b₃) eine zweite Gerade (O_{S1}, D_{S2}, D_{S3}) für jeden Kontrollpunkt (P₁, P₂, P₃) berechnet wird, wobei jede zweite Gerade (D_{S1}, D_{S2}, D_{S3}) durch den Bezugspunkt (Pr) des Luftfahrzeugs (10) verläuft, wobei die erste Anzeigefunktion (F₁) und die zweite Anzeigefunktion (F₂) unterschiedlich sind,
- jede erste Gerade (DP₁, D_{P2}, D_{P3}) und jede zweite Gerade (D_{S1}, D_{S2}, D_{S3}), die ein und demselben Kontrollpunkt (P₁, P₂, P₃) entsprechen, verglichen werden,
- definiert wird, dass die zumindest teilweise perspektivische Ansicht (8) der Umgebung des Luftfahrzeugs (10) integriert wird, wenn jede erste Gerade (DP₁, D_{P2}, D_{P3}) und jede zweite Gerade (D_{S1}, D_{S2}, D_{S3}), die ein und demselben Kontrollpunkt (P₁, P₂, P₃) entsprechen, einen Winkelabstand aufweisen, der kleiner oder gleich einem vorbestimmten Spielraum ist.

2. Verfahren nach Anspruch 1,
**dadurch gekennzeichnet, dass** jeder Kontrollpunkt (P₁, P₂, P₃) in dem lokalen Bezugssystem (X₁₀, Y₁₀, Z₁₀) definiert ist, und die Lage eines jeden Kontrollpunkts (P₁, P₂, P₃) in einem terrestrischen Bezugsystem (X, Y, Z) berechnet wird.

3. Verfahren nach einem der Ansprüche 1 bis 3,
**dadurch gekennzeichnet, dass** drei Kontrollpunkte (P₁, P₂, P₃) definiert werden, die mit dem Bezugspunkt (Pr) drei nicht koplanare erste Geraden (DP₁, D_{P2}, D_{P3}) bilden.

4. Verfahren nach einem der Ansprüche 1 bis 3,
**dadurch gekennzeichnet, dass** jeder Kontrollpunkt (P₁, P₂, P₃) durch die erste Gerade (DP₁, D_{P2}, D_{P3}) charakterisiert ist, die dem Kontrollpunkt entspricht, der relativ zu der Längs-Rollachse (X₁₀) positioniert ist, und durch den Bezugspunkt (Pr) und durch einen Abstand L von dem Bezugspunkt (Pr).

5. Verfahren nach einem der Ansprüche 1 bis 3,
**dadurch gekennzeichnet, dass** der Bezugspunkt (Pr) charakterisiert ist durch erste Koordinaten in einem terrestrischen Bezugssystem (X, Y, Z) und wobei jeder Kontrollpunkt (P₁, P₂, P₃) ein aus einer Datenbank bekannter Punkt ist, dessen zweite Koordinaten in dem terrestrischen Bezugssystem (X, Y, Z) bekannt sind, wobei die erste Gerade (D_{P1}, D_{P2}, D_{P3}), die einem Kontrollpunkt (P₁, P₂, P₃) entspricht, bestimmt wird ausgehend von den ersten Koordinaten des Bezugspunktes (Pr) und den zweiten Koordinaten des Kontrollpunktes (P₁, P₂, P₃).

6. Verfahren nach einem der Ansprüche 1 bis 5,
**dadurch gekennzeichnet, dass** jeder Kontrollpunkt (P₁, P₂, P₃) in dem Sichtfeld der mindestens teilweise perspektivischen Ansicht (8) gewählt wird.

7. Verfahren nach einem der Ansprüche 1 bis 2,
**dadurch gekennzeichnet, dass** jeder Kontrollpunkt (P₁, P₂, P₃) gewählt wird, um die mindestens teilweise perspektivische Ansicht (8) in einem gegebenen Zeitintervall abzutasten.

8. Verfahren nach einem der Ansprüche 1 bis 7,
**dadurch gekennzeichnet, dass**, wenn die mindestens teilweise perspektivische Ansicht (8) nicht integriert ist, die Anzeige der mindestens teilweise perspektivischen Ansicht (8) auf dem Anzeigemittel (2, 6) geändert wird, um einen Piloten des Luftfahrzeugs (10) zu informieren.

9. Verfahren nach einem der Ansprüche 1 bis 8,
**dadurch gekennzeichnet, dass** die erste Anzeigefunktion (F₁) eine Anzeigefunktion der zumindest teilweise perspektivischen Ansicht (8) der Umgebung des Luftfahrzeugs (10) auf dem Anzeigemittel (2, 6) ist, und die zweite Anzeigefunktion (F₂) eine Anzeigefunktion der Flugsteuerungssymbologie (9) auf dem Anzeigemittel (2, 6) ist.

10. Verfahren nach einem der Ansprüche 1 bis 8,
**dadurch gekennzeichnet, dass** die erste Anzeigefunktion (F₁) eine Anzeigefunktion der Flugsteuerungssymbologie (9) auf dem Anzeigemittel (2, 6) ist, und die zweite Anzeigefunktion (F₂) eine Anzeigefunktion der zumindest teilweise perspektivischen Ansicht (8) der Umgebung des Luftfahrzeugs (10) auf dem Anzeigemittel (2, 6) ist.

11. Verfahren nach einem der Ansprüche 1 bis 10,
**dadurch gekennzeichnet, dass** eine der Anzeigefunktionen (F₁, F₂) ein größeres Sicherungsniveau aufweist als die andere Anzeigefunktion (F₁, F₂).

12. Verfahren nach einem der Ansprüche 1 bis 11,
**dadurch gekennzeichnet, dass** eine der Anzeigefunktionen (F₁, F₂) ein Kritikalitätsniveau DAL A oder DAL B unterschiedslos aufweist.

13. Verfahren nach einem der Ansprüche 1 bis 12,
**dadurch gekennzeichnet, dass** der Bezugspunkt (Pr) der Bezugspunkt der Anzeige der synthetischen graphischen Darstellung der Ansicht aus dem Luftfahrzeug (10) nach draußen ist.

14. Verfahren nach Anspruch 3,
**dadurch gekennzeichnet, dass** der erste Kontrollpunkt (P₁) auf der Rollachse des Luftfahrzeugs (10) liegt, und die Kontrollpunkte (P₂, P₃) auf der Nickachse (Y₁₀) in einem ersten Abstand L1 von dem Bezugspunkt (Pr) liegen,
- eine erste Linie eines künstlichen Horizonts (17), erste Neigungsbezugspunkte (18) und erste Kursbezugspunkte (19) auf dem Anzeigemittel (2, 6), ausgehend von den Anzeigekoordinaten (a₁, b₁), (a₂, b₂), (a₃, b₃) eines jeden Kontrollpunktes (P₁, P₂, P₃), auf dem Anzeigemittel angezeigt werden, wobei die erste Linie des künstlichen Horizonts (17) durch die Anzeigekoordinaten (a₂, b₂), (a₃, b₃) verläuft, die den Kontrollpunkten (P₂, P₃) entsprechen, wobei die ersten Neigungsbezugspunkte (18) gleich beabstandet und parallel zu der ersten Linie des künstlichen Horizonts (17) sind, und die ersten Markierungen des Kurses (19) gleich beabstandete und zu einer Richtung, die senkrecht zu der ersten Linie des künstlichen Horizonts (17) ist, parallele Abschnitte sind, die durch die Anzeigekoordinaten (a₁, b₁) des ersten Kontrollpunkts (P₁) verlaufen,
- komplementäre Punkte (P'₁, P'₂, P'₃) durch die Umkehrfunktion ((F₂)⁻¹) der zweiten Anzeigefunktion (F₂) bestimmt werden, wobei die komplementären Punkte (P'₁, P'₂, P'₃) sich auf den zweiten Geraden (D_{S1}, D_{S2}, D_{S3}) in einem zweiten Abstand L2 von dem Bezugspunkt (Pr) befinden,
- komplementäre Anzeigekoordinaten (a'₁, b'₁), (a'₂, b'₂), (a'₃, b'₃) eines jeden komplementären Punktes (P'₁, P'₂, P'₃) auf dem Anzeigemittel (2, 6) durch die erste Anzeigefunktion (F₁) bestimmt werden, und
- eine zweite Linie des künstlichen Horizonts (27), zweite Neigungsbezugspunkte (28) und zweite Kursbezugspunkte (29) auf dem Anzeigemittel (2, 6) ausgehend von den komplementären Anzeigekoordinaten (a'₁, b'₁), (a'₂, b'₂), (a'₃, b'₃) angezeigt werden, wobei die zweite Linie des künstlichen Horizonts (27) durch die komplementären Anzeigekoordinaten (a'₂, b'₂), (a'₃, b'₃) verlaufen, die den komplementären Punkten (P'₂, P₃) entsprechen, wobei die zweiten Neigungsbezugspunkte (28) gleich beabstandet und parallel zu der zweiten Linie des künstlichen Horizonts (27) sind, wobei die zweiten Kursbezugspunkte (29) Abschnitte sind, die parallel zu einer Richtung sind, die senkrecht zu der zweiten Linie des künstlichen Horizonts (27) verläuft, und durch die komplementären Anzeigekoordinaten (a'₁, b'₁) des ersten komplementären Punkts (P'₁) verlaufen.

15. Vorrichtung zur Anzeige einer synthetischen Sicht (1) aus einem Luftfahrzeug (10) heraus, wobei die Anzeigevorrichtung einer synthetischen Sicht (1) mindestens ein Anzeigemittel (2, 6), mindestens einen Speicher (3) und mindestens ein Rechenmittel (4) aufweist, wobei der Speicher (3) mindestens eine Bank von Umgebungsdaten des Luftfahrzeugs (10) und Rechenbefehle speichert, wobei das Anzeigemittel einer synthetischen Sicht (1) es erlaubt, auf mindestens einem Anzeigemittel (2, 6) einerseits eine zumindest teilweise perspektivische Ansicht (8) der Umgebung des Luftfahrzeugs (10) und andererseits eine Symbologie der Fluglenkung (9) anzuzeigen, wobei die Vorrichtung zur Anzeige einer synthetischen Ansicht (1) mit mindestens einem Positionierungsmittel (5) des Luftfahrzeugs (10) verbindbar ist, welches es erlaubt, mindestens den Kurs und die Lage des Luftfahrzeugs (10) sowie einen Bezugspunkt (Pr) des Luftfahrzeugs (10), eine Rollachse (X₁₀), die sich vom hinteren Teil des Luftfahrzeugs (10) zum vorderen Teil des Luftfahrzeugs (10) erstreckt, eine Gierachse (Z₁₀), die sich von unten nach oben senkrecht zu der Rollachse (X₁₀) erstreckt, und eine Nickachse (Y₁₀), die sich von rechts nach links senkrecht zu der Rollachse (X₁₀) und der Gierachse (Z₁₀) erstreckt, die ein lokales Bezugssystem (X₁₀, Y₁₀, Z₁₀), das mit dem Luftfahrzeug (10) verknüpft ist, bilden, zu bestimmen,
**dadurch gekennzeichnet, dass** die Vorrichtung zur Anzeige einer synthetischen Ansicht (1) in der Lage ist, das Verfahren zur Sicherung einer synthetischen graphischen Darstellung der Sicht aus einem Luftfahrzeug (10) nach draußen gemäß den Ansprüchen 1 bis 14 auszuführen, um die Anzeige der mindestens teilweise perspektivischen Ansicht (8) der Umgebung des Luftfahrzeugs (10) zu sichern.

16. Luftfahrzeug (10) mit einer Vorrichtung zur Anzeige einer synthetischen Ansicht (1) und mit einem Positionierungsmittel (5), **dadurch gekennzeichnet, dass** die Vorrichtung zur Anzeige einer synthetischen Ansicht (1) eine Vorrichtung gemäß Anspruch 15 ist.

## Claims

1. Method contributing to making safe a synthetic graphical representation of the view outside an aircraft (10), said aircraft (10) comprising at least one visualisation viewing means (2,6) on which it is possible to display on the one hand an at least partial view in perspective (8) of the environment of said aircraft (10) and on the other hand piloting symbology (9) of said aircraft (10), a roll axis (X₁₀) extending from the rear of said aircraft (10) to the front of the aircraft (10), a yaw axis (Z₁₀) extending upwards perpendicularly to said roll axis (X₁₀) and a pitch axis (Y₁₀) extending from right to left perpendicularly to said roll axis (X₁₀) and yaw axis (Z₁₀), forming a local reference frame (X₁₀, Y₁₀, Z₁₀) tied to said aircraft (10), **characterised in that**,
- at least the heading and the attitude of said aircraft (10) and a reference point (Pr) of said aircraft (10) are determined,
- at least ono shock point (D₁, D₂, D₃) situated in said environment of said aircraft (10) is defined, each check point (P₁,P₂,P₃) forming with said reference point (Pr) a first straight line (D_{P1},D_{P2},D_{P3}), the position of each first straight line (D_{P1}, D_{P2}, D_{P3}) being known in said local reference frame (X₁₀, Y₁₀, Z₁₀) tied to said aircraft (10),
- the display coordinates (a₁,b₁), (a₂,b₂), (a₃,b₃) of each check point (P₁, P₂, P₃) on said visualisation viewing means (2,6) are calculated by a first display function (F₁),
- a second straight line (D_{S1}, D_{S2}, D_{S3}) for each check point (P₁,P₂,P₃) is calculated by the inverse ((F₂)⁻¹) of a second display function (F₂) and from said display coordinates (a₁,b₁) (a₂, b₂), (a₃, b₃), each second straight line (D_{S1},D_{S2},D_{S3}) passing through said reference point (Pr) of said aircraft (10), said first display function (F₁) and said second display function (F₂) being distinct,
- each first straight line (D_{P1},D_{P2}, D_{P3}) and each second straight line (D_{S1}, D_{S2}, D_{S3}) corresponding to a same check point (P₁,P₂,P₃) are compared,
- it is defined that said at least partial view in perspective (8) of the environment of said aircraft (10) is trustworthy if each first straight line (D_{P1}, D_{P2}, D_{P3}) and each second straight line (D_{S1}, D_{S2}, D_{S3}) corresponding to a same check point (P₁,P₂,P₃) have an angular difference less than or equal to a predetermined margin.

2. Method according to claim 1,
**characterised in that** each check point (P₁,P₂,P₃) is defined in said local reference frame (X₁₀, Y₁₀, Z₁₈), and then the position of each check point (P₁,P₂,P₃) is calculated in a terrestrial reference frame (X,Y,Z).

3. Method according to any one of claims 1 to 2,
**characterised in that** three check points (P₁,P₂,P₃) forming with said reference point (Pr) three first non-coplanar straight lines (D_{P1},D_{P2},D_{P3}) are defined.

4. Method according to any one of claims 1 to 3,
**characterised in that** each check point (P₁, P₂, P₃) is **characterised by** said first straight line (D_{P1}, D_{P2}, D_{P3}) corresponding to said check point positioned relative to said longitudinal roll axis (X₁₀) and passing through said reference point (Pr) and by a distance L from said reference point (Pr).

5. Method according to any one of claims 1 to 3,
**characterised in that** said reference point (Pr) is **characterised by** first coordinates in a terrestrial reference frame (X, Y, Z) and each check point (P₁, P₂, P₃) is a point known from a database having second coordinates that are known in said terrestrial reference frame (X,Y,Z), said first straight line (D_{P1}, D_{P2}, D_{P3}) corresponding to a check point (P₁, P₂, P₃) being determined from said first coordinates of the reference point (Pr) and from said second coordinates of said check point (P₁,P₂,P₃).

6. Method according to any one of claims 1 to 5,
**characterised in that** each check point (P₁, P₂, P₃) is chosen from the field of said at least partial view in perspective (8).

7. Method according to any one of claims 1 to 2,
**characterised in that** each check point (P₁,P₂,P₃) is chosen so as to scan said at least partial view in perspective (8) in a given time interval.

8. Method according to any one of claims 1 to 7,
**characterised in that**, when said at least partial view in perspective (8) is not trustworthy, the display of said at least partial view in perspective (8) on said visualisation viewing means (2,6) is modified in order to inform a pilot of said aircraft (10).

9. Method according to any one of claims 1 to 8, **characterised in that** said first display function (F₁) is a function for displaying said at least partial view in perspective (8) of said environment of said aircraft (10) on said visualisation viewing means (2,6) and said second display function (F₂) is a function for displaying said piloting symbology (9) on said visualisation viewing means (2,6).

10. Method according to any one of claims 1 to 8,
**characterised in that** said first display function (F₁) is a function for displaying said piloting symbology (9) on said visualisation viewing means (2,6) and said second display function (F₂) is a function for displaying said at least partial view in perspective (8) of said environment of said aircraft (10) on said visualisation viewing means (2,6).

11. Method according to any one of claims 1 to 10,
**characterised in that** one of said display functions (F₁,F₂) has a safety level higher than the other display function (F₁,F₂).

12. Method according to any one of claims 1 to 11,
**characterised in that** one of said display functions (F₁,F₂) has a criticality level that is equally well DAL A or DAL B.

13. Method according to any one of claims 1 to 12,
**characterised in that** said reference point (Pr) is the reference point of said display of said synthetic graphical representation of said view outside said aircraft (10).

14. Method according to claim 3,
**characterised in that** said first check point (P₁) being situated on said roll axis of said aircraft (10) and said check points (P₂,P₃) being situated on said pitch axis (Y₁₀) at a first distance L1 from said reference point (Pr),
- a first artificial horizon line (17), first attitude marks (18) and first heading marks (19) are displayed on said visualisation viewing means (2,6) from said display coordinates (a₁,b₁), (a₂,b₂), (a₃,b₃) of each check point (P₁, P₂, P₃), said first artificial horizon line (17) passing through said display coordinates (a₂,b₂), (a₃,b₃) corresponding to said check points (D₂,D₃), said first attitude marko (10) being equidistant and parallel to said first artificial horizon line (17) and said first heading marks (19) being segments equidistant and parallel to a direction perpendicular to said first artificial horizon line (17) and passing through said display coordinates (a₁, b₁) of the said check point (P₁),
- additional points (P'₁, P'₂, P'₃) are determined by means of the inverse ((F₂)⁻¹) of said second display function (F₂), said additional points (P'₁, P'₂, P'₃) lying on said straight second lines (D_{S1}, D_{S2}, D_{S3}) at a second distance L2 from said reference point (Pr),
- additional display coordinates (a'₁,b'₁),(a'₂,b'₂),(a'₃,b'₃) of each additional point (P'₁,P'₂,P'₃) on the visualisation viewing means (2,6) are determined by said first display function (F₁), and
- a second artificial horizon line (27), second attitude marks (28) and second heading marks (29) are displayed on said visualisation viewing means (2,6) from said additional display coordinates (a'₁,b'₁),(a'₂,b'₂),(a'₃,b'₃), said second artificial horizon line (27) passing through said additional display coordinates (a'₂,b'₂),(a'₃,b'₃) corresponding to said additional points (P'₂,P'₃,) said second attitude marks (28) being equidistant and parallel to said second artificial horizon line (27), said second heading marks (29) being segments parallel to a direction perpendicular to said second artificial horizon line (27) and passing through said additional display coordinates (a'₁,b'₁) of said first additional points (P'₁).

15. Synthetic vision display device (1) of an aircraft (10), said synthetic vision display device (1) comprising at least one visualisation viewing means (2,6), at least one memory (3) and at least one calculation means (4), said memory (3) storing at least one database of the environment of said aircraft (10) and calculation instructions, said synthetic vision display device (1) making it possible to display on at least one visualisation viewing means (2,6) on the one hand an at least partial view in perspective (8) of the environment of said aircraft (10) and on the other hand piloting symbology (9), said synthetic vision display device (1) being suitable for being connected to at least one positioning means (5) of said aircraft (10) enabling at least the heading and the attitude of said aircraft (10) to be determined together with a reference point (Pr) of said aircraft (10), a roll axis (X₁₀) extending from the rear of said aircraft (10) to the front of said aircraft (10), a yaw axis (Z₁₀) extending upwards perpendicularly to said roll axis (X₁₀) and a pitch axis (Y₁₀) extending from right to left perpendicularly to said roll (X₁₀) and yaw (Z₁₀) axes, forming a local reference frame (X₁₀,Y₁₀,Z₁₀) tied to said aircraft (10),
**characterised in that** said synthetic vision display device (1) is capable of performing the method contributing to making safe a synthetic graphical representation of the view outside an aircraft (10) according to claims 1 to 14 in order to make safe the display of said at least partial view in perspective (8) of the environment of said aircraft (10).

16. Aircraft (10) comprising a synthetic vision display device (1) and at least one positioning means (5),
**characterised in that** said synthetic vision display device (1) is a device according to claim 15.
